# EUROPEAN PATENT SPECIFICATION

(11) **EP 0 555 037 B1**
(45) Date of publication and mention of the grant of the patent: **26.08.1998**
(21) Application number: 93300718.9
(22) Date of filing: 01.02.1993
(51) Int. Cl.: G11B 11/10

(54) **Magneto-optical information recording/reproducing apparatus**
Vorrichtung zur Aufzeichnung/Wiedergabe magnetooptischer Information
Appareil d'enregistrement/reproduction d'information magnétooptique

(30) Priority: 05.02.1992 JP 47788/92
(43) Date of publication of application: 11.08.1993
(73) Proprietor: CANON KABUSHIKI KAISHA, Tokyo (JP)
(72) Inventor: Yamamoto, Masakuni, c/o Canon Kabushiki Kaisha, Ohta-ku, Tokyo (JP)
(74) Representative: Beresford, Keith Denis Lewis

(56) References cited:
- EP-A- 264 284
- EP-A- 352 104
- EP-A- 453 576
- US-A- 4 599 714
- US-A- 4 660 187

## Description

### BACKGROUND OF THE INVENTION

### Field of the Invention

The present invention relates to a magneto-optical information recording/reproducing apparatus, which records information in a magneto-optical recording medium and/or which reproduces information recorded in the magneto-optical recording medium.

### Related Background Art

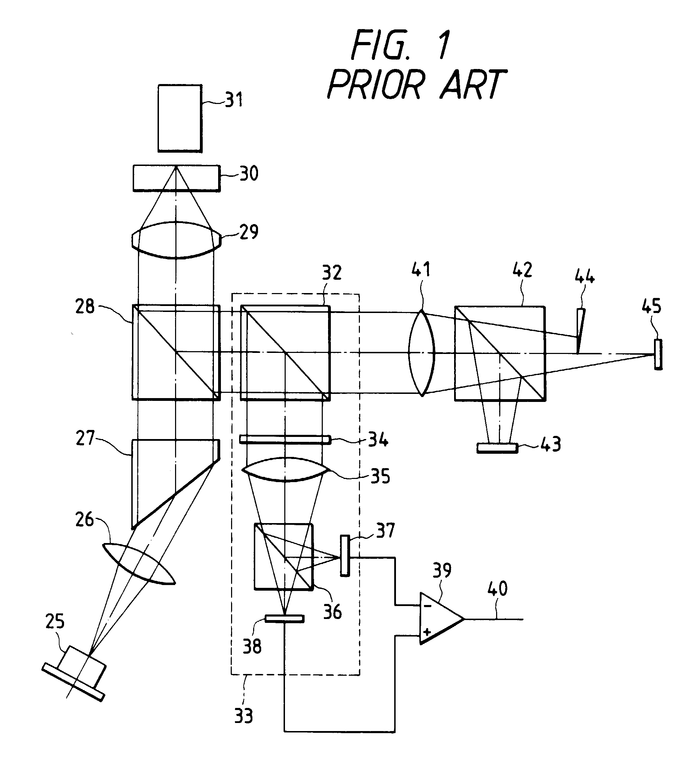

There is a great expectation recently on a magneto-optical information recording/reproducing apparatus using a recording medium of magneto-optical disk, which is a magneto-optical recording medium, because it has the portability and a great memory capacity and the information recorded is erasable and rewritable. Fig. 1 is a constitutional drawing to show an optical system of a conventional magneto-optical information recording/reproducing apparatus. In Fig. 1, reference numeral 25 designates a semiconductor laser, which is a light source for recording and reproducing. A diverging flux radiated from the laser 25 is collimated by a collimator lens 26, and modified into a collimated flux circular in cross section by a beam shaping prism 27. Let this collimated flux be linearly polarized in a direction of polarization in parallel with the sheet plane of Fig. 1, which will be referred to as P polarization. The optical flux of P polarization enters a polarizing beam splitter 28. The polarizing beam splitter 28 has such properties that for P polarization the transmittance is 60 % and the reflectance is 40 % while for linear polarization normal to the P polarization (as will be referred to as S polarization) the transmittance is approximately 0 % and the reflectance is approximately 100 %. The optical flux of P polarization transmitted through the polarizing beam splitter 28 is converged by an objective lens 29 to form an optical spot on a magnetic layer of a magneto-optical disk 30. An external magnetic field is applied from a magnetic head 31 to the portion irradiated by the optical spot to record information in an information magnetic domain on the magnetic layer.

The reflected light from the magneto-optical disk 30 returns through the objective lens 29 to the polarizing beam splitter 28, where a part of the reflected light is separated and then led to a reproduction optical system. The separated optical flux is further separated by a separate polarizing beam splitter 32 in the reproduction optical system. The polarizing beam splitter 32 has such properties that for P polarization the transmittance is 20 % and the reflectance is 80 % while for S polarization the transmittance is approximately 0 % and the reflectance is approximately 100 %. One optical flux separated by the polarizing beam splitter 32 is guided to the reproduction optical system 33 to produce a reproduction signal as detailed later. The other optical flux is guided through a condenser lens 41 to a half prism 42, where the flux is divided into two, one of which is guided to a photo detector 43 and the other of which is via a knife edge 44 to a photo detector 45. These control optical systems produce servo error signals for autotracking control and for autofocusing control of optical beam.

The reproduction optical system 33 comprises a half wave plate 34 for rotating the polarization direction of optical flux by 45 degrees, a condenser lens 35 for condensing the optical flux, a polarizing beam splitter 36, and photo detectors 37, 38 for respectively detecting optical fluxes separated by the polarizing beam splitter 36. The polarizing beam splitter 36 has such properties that for P polarization the transmittance is 100 % and the reflectance is 0 % while for S polarization the transmittance is 0 % and the reflectance is 100 %. A difference is detected by a differential amplifier 39 between signals detected by the photo detectors 37 and 38 to produce a reproduction signal 40. Information may be recorded in the magneto-optical recording medium by a difference in direction of vertical magnetization. There are known recording methods such as the optical modulation method and the magnetic modulation method. The optical modulation method is of a type in which a laser beam modulated according to recording information is radiated while applying a constant external magnetic field onto a recording medium. The magnetic modulation method is of a type in which an external magnetic field modulated according to recording information is applied while radiating a laser beam with a constant intensity upon the recording medium.

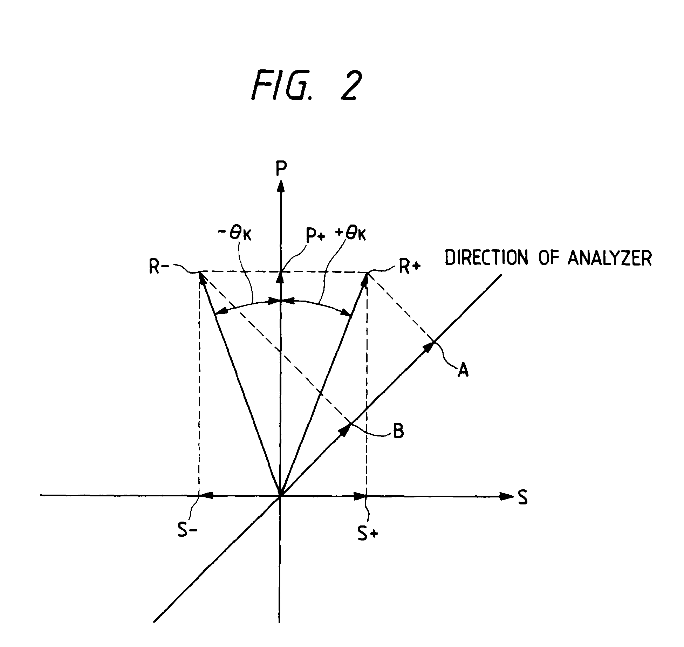

Incidentally, if the magneto-optical recording medium in which information is recorded by the difference in direction of magnetization is irradiated with linearly polarized light, reflected light has a direction of polarization rotated clockwise or counterclockwise depending upon the difference in direction of magnetization. For example, let the polarization direction of linearly polarized light incident into the magneto-optical recording medium be the P direction in the coordinate system as shown in Fig. 2, the reflection light with downward magnetization be R₊ rotated by +θ_{K}, and the reflection light with upward magnetization be R₋ rotated by -θ_{K.} Then, if an analyzer is placed in the direction as shown in Fig. 2, light passing through the analyzer would be A for R₊ and B for R₋ in Fig. 2. The light may be detected by a photo detector to obtain information as a difference in light intensity. In the example of Fig. 1, the polarizing beam splitter 36 functions as the analyzer, which is an analyzer at +45 degrees to the P axis for one optical flux separated while at -45 degrees to the P axis for the other optical flux. In other words, signal components obtained by the photo detectors 37, 38 are opposite in phase, and, therefore, noises may be reduced in reproduction signals by detecting a difference between the signal components.

The conventional magneto-optical information recording/reproducing apparatus as described, however, reproduces information by detecting the light in the P direction and the light in the S direction using the polarizing beam splitter 36 as shown in Fig. 1. There have been problems in such a reproduction method an increase in number of parts of the optical head, an increase in complexity of construction, and an increase in size, accordingly.

EP-A-0352104 discloses a magnetooptical recording medium recorded with recording marks of two different widths. A detector having a detection surface which is divided into two areas effective to detect radiation reflected from different areas along the length of the recording marks may be used.

### SUMMARY OF THE INVENTION

The present invention has been accomplished to solve the above-described problems. It is an object of the present invention to provide a magneto-optical information recording/reproducing apparatus which is reduced in number of constitutional parts of an optical head and which can simplify the construction of the optical head and reduce the size and the weight thereof.

According to a first aspect of the present invention there is provided an optical apparatus for performing at least the function of reproducing information on a magneto-optical recording medium, the information being recorded as a region of the medium of inverted magnetization relative to surrounding regions of the medium, the apparatus comprising:
irradiating means for irradiating the recording medium with a beam of radiation polarized in a predetermined direction, the beam and region beinq arranged to move relative to each other;
the width of said region of the recording medium is smaller in the direction perpendicular to the direction of relative movement of said beam and said region than the diameter of the beam of radiation;
optical means for separating linearly polarized radiation having a direction of polarization perpendicular to said predetermined direction from the radiation passing from said recording medium; and
detecting means arranged to detect the radiation separated out by said optical means,
the apparatus being characterised in that
said detecting means has a detection surface divided into at least four areas such that two diagonally opposed areas of the detection surface are arranged to receive radiation from two irradiated parts of the medium extending beyond the region at opposite edges of said region, and the two other diagonally opposed areas of the detection surface are arranged to detect radiation from different simultaneously irradiated parts of the region along the direction of relative movement of the region and the beam;
means for summing detection signals from the pairs of opposing diagonal areas of the detection surface of the detector; and
means for detecting the difference between the summed detection signals; and
means for reproducing information based on changes in the distribution of radiation detected by said detecting means.

According to a second aspect of the present invention there is provided a method for performing at least the function of reproducing information on a magneto-optical recording medium, the information being recorded as a region of the medium of inverted magnetization relative to surrounding regions of the medium, the method comprising the steps of:
irradiating the recording medium with a beam of radiation polarized in a predetermined direction, the beam and region being arranged to move relative to each other;
the width of said region of the recording medium is smaller in the direction perpendicular to the direction of relative movement of said beam and said region than the diameter of the beam of radiation;
separating out the linearly polarized radiation having a direction of polarization perpendicular to said predetermined direction from the radiation passing from said recording medium; and
detecting the radiation separated out by said optical means,
the method being characterised in that
said detecting step comprises a first step of detecting radiation from two irradiated parts of the medium extending beyond the region at opposite edges of the region, and a second step of detecting radiation from two different simultaneously irradiated areas of the region along the direction of relative movement of the region and the beam;
summing the pairs of detection signals formed in each of said first and second detection steps;
detecting the difference between the summed detection signals; and
reproducing information using changes in the distribution of detected radiation by said detecting means.

A number of embodiments of the invention will now be described, by way of example only, with reference to the accompanying drawings, in which:
Fig. 1 is a constitutional drawing to show an optical system of a conventional magneto-optical recording/reproducing apparatus;
Fig. 2 is a drawing to show a direction of polarization of linearly polarized light incident into a magneto-optical recording medium, states of rotation of reflection light depending upon a direction of magnetization on the medium, and a state of change thereof to an analyzer;
Fig. 3 is a constitutional drawing to show an embodiment of a magneto-optical information recording/reproducing apparatus according to the present invention;
Fig. 4 is a drawing to show an information reproduction operation in the embodiment as shown in Fig. 3;
Fig. 5 is a circuit diagram to show a specific example of an information reproducing circuit; and
Fig. 6 is a constitutional drawing to show another embodiment of the magneto-optical information recording/reproducing apparatus according to the present invention.

### DETAILED DESCRIPTION OF THE PREFERRED EMBODIMENTS

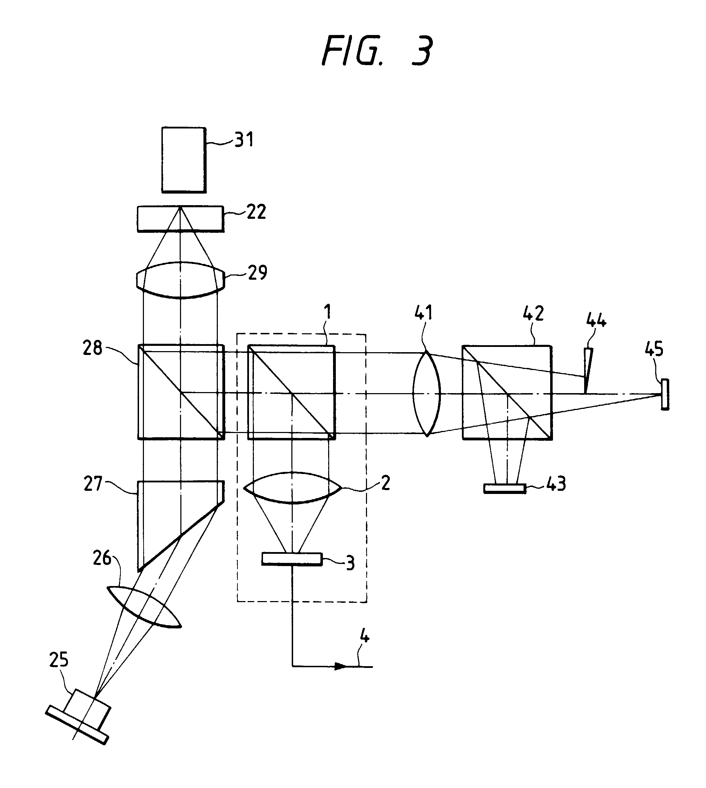

The embodiments according to the present invention will be explained in detail with reference to the accompanying drawings. Fig. 3 is a constitutional drawing to show an embodiment of a magneto-optical information recording/reproducing apparatus according to the present invention. In Fig. 3, the same numerals are given to the same elements as in the conventional apparatus as shown in Fig. 1, and the details thereof will be omitted in the present embodiment. In Fig. 3, reference numeral 22 designates a magneto-optical disk of garnet type, which shows about 5 degrees of polarization rotation angle θ_{K}. An alloy of rare earth and transition metal is usually used as the magneto-optical recording medium, which shows a very small polarization rotation angle θ_{K}, normally not more than 1 degree. Therefore, the present embodiment employs one of garnet type, which has a large polarization rotation angle. It is set as the laser flux of the semiconductor laser 25 is linearly polarized in the direction of polarization in parallel with the sheet plane of Fig. 3 in the same manner as in the conventional apparatus (P polarization). Numeral 1 denotes a polarizing beam splitter having such properties that for P polarization the transmittance is 100 % and the reflectance is 0 % while for S polarization the transmittance is 0 % and the reflectance is 100 %, which means that the optical flux of P polarization is transmitted but the optical flux of S polarization is reflected. Numeral 2 designates a condenser lens for condensing the optical flux of S polarization separated by the beam splitter 1, and numeral 3 a four-divided photo detector for detecting the light condensed by the condenser lens 2. The magnetic modulation method is employed as the recording method in the present embodiment, and the magnetic head 31 produces a magnetic field modulated according to a recording signal to be recorded accordingly.

An operation of the present embodiment is next explained. When an optical flux emitted from the semiconductor laser 25 is incident into the magneto-optical disk 22 in information reproduction, the polarization direction is rotated corresponding to the direction of vertical magnetization by the magneto-optical effects (Faraday effect and Kerr effect) as explained with Fig. 2, whereby a linear polarization (S polarization) is produced with a polarization plane perpendicular to the polarization direction of P polarization. The optical flux incident into the magneto-optical disk 22 is an optical flux of P polarization as described above. The intensity of light (quantity of light) of the S polarization caused by the magneto-optical effects is about 100 times larger than that of a conventional recording medium of rare earth-transition metal type (with the polarization rotation angle being 0.5 degree). The optical fluxes of P polarization and S polarization reflected by the magneto-optical disk 22 are separated by the polarizing beam splitter 28 and directed to the reproduction optical system to enter the polarizing beam splitter 1. Since the polarizing beam splitter 1 has such properties as explained above that for P polarization the transmittance is 100 % and the reflectance is 0 % while for S polarization the transmittance is 0 % and the reflectance is 100 %, the reflection optical flux is separated into the optical flux of P polarization and the optical flux of S polarization. The optical flux of P polarization passes through the polarizing beam splitter 1 without reflection to be guided to a control optical system, where a focus error signal and a tracking error signal for autofocusing and autotracking controls are produced in the same manner as in the conventional apparatus. The present embodiment employs the knife-edge method as the autofocusing method and the push-pull method as the autotracking method. The optical flux of S polarization is detected through the condenser lens 2 by the four-divided photo detector 3 to produce the reproduction signal 4. The four-divided photo detector 3 has a detection surface divided by division lines in the form of cross perpendicular to each other, and the four-divided photo detector 3 is disposed such that the division lines are at an angle of 45 degrees to the information track of the magneto-optical disk 22. If only the optical flux of S polarization is detected, a phase difference is π between the optical fluxes of S₊ to the upward magnetization and of S₋ to the downward magnetization, as apparent from Fig. 2. In other words, if a boundary between the upward magnetization and the downward magnetization is within an optical spot for reproduction, the same diffraction is caused as by a pit with a depth of λ/4 (λ is a wavelength of light). In the present invention, information is reproduced by detecting a change in quantity of light or a change in light distribution of the S polarization caused by the diffraction of light.

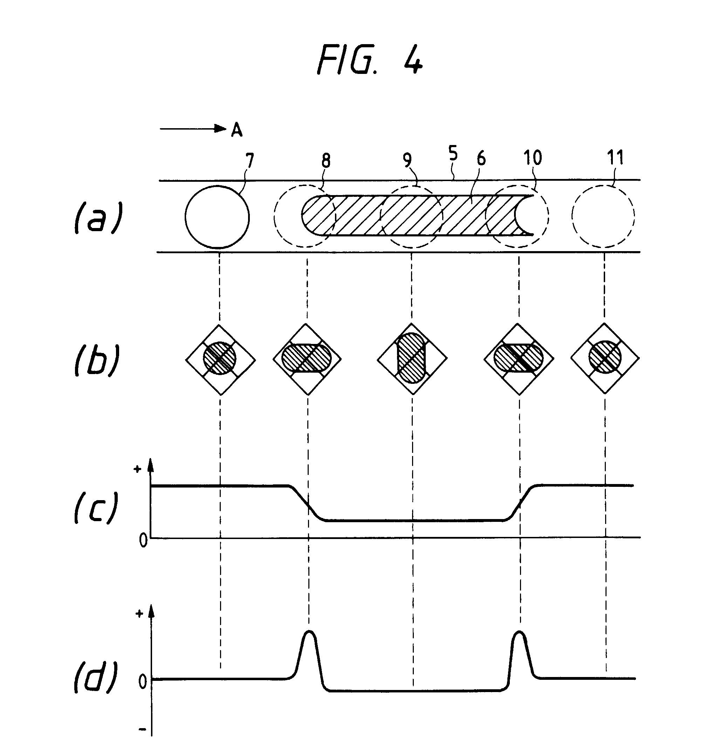

An operation of information reproduction is detailed with Fig. 4. Fig. 4 shows in (a) a drawing to show a magnetic domain recorded in the magneto-optical disk and an optical spot for reproduction, in which numeral 5 denotes an information track and numeral 6 a domain (information pit) recorded in the magnetic modulation method. In the present embodiment, the magneto-optical disk 22 is formatted to have the downward magnetization upon initialization, and the domain 6 recorded thus has the upward magnetization. Also, a width of the domain 6 in the direction perpendicular to the track is smaller than a diameter of the optical spot. The optical spot 7 scans on the information track 5 in the direction of A as shown by numerals 8, 9, 10, and 11 in (a) of Fig.4. Fig. 4 shows in (b) a drawing to show a distribution of light on the four-divided photo detector 3 at respective positions of the optical spot. The four-divided photo detector 3 is positioned such that the division lines are at an angle of 45 degrees to the information track 5, as seen in (b) of Fig. 4. The entire area in the optical spot is magnetized in the same direction (downward) at the positions 7 and 11 of the optical spot, so that no diffraction of light occurs to show a circular distribution of light on the photo detector 3. The quantity of light is maximum at 7 and 11. At the positions 8 and 10 of optical spot, a circular boundary between the upward magnetization and the downward magnetization, that is, an edge of the domain 6, is located in the optical spot, so that the light is diffracted in the direction parallel to the information track 5 to show a horizontally elongate distribution on the detection surface. The quantity of light at 8 and 10 becomes smaller than that at the positions 7 and 11 of the optical spot. There are the upward magnetization and the downward magnetization within the light spot thereabove and therebelow at the position 9, the light is diffracted in the direction perpendicular to the information track 5 to show a vertically elongate distribution. The quantity of light at 9 becomes further smaller than that at the positions 10 and 11 of the optical spot.

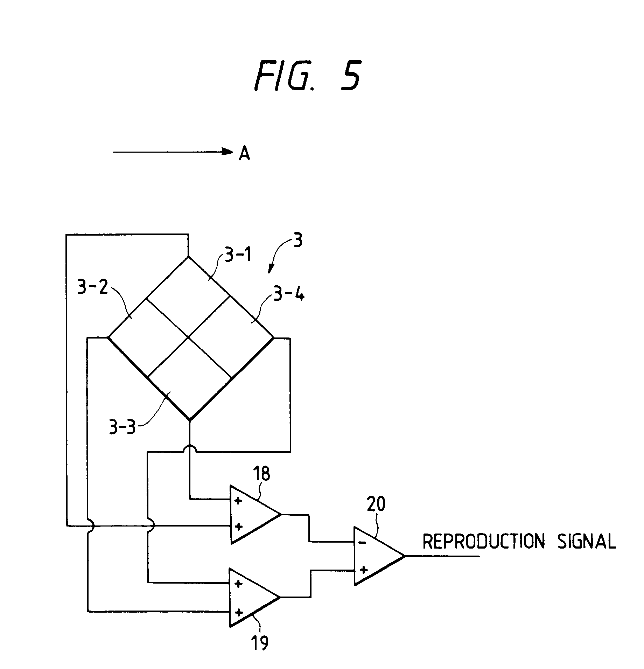

A single photo detector without division will do to detect a change in quantity of light, and therefore the four-divided photo detector 3 used in the present embodiment may be replaced by a usual photo detector. In case that the four-divided photo detector 3 is used as it is, the signals from the respective detection segments of the detection surface are to be added together. The photo detector detects the change in quantity of light to obtain the reproduction signal as shown in (c) of Fig. 4. In detail, the light is diffracted by the domain 6 to reduce the quantity of light thereby to detect the domain 6, whereby the information is reproduced. In contrast, in case that the change in distribution of light is detected, the aforementioned four-divided photo detector 3 is to be used. Fig. 5 shows a specific example of the reproduction circuit therefor, in which numerals 3-1 to 3-4 represent the respective detection surface segments of the four-divided photo detector 3, numerals 18 and 19 are summing amplifiers, and numeral 20 is a differential amplifier. In Fig. 5, A represents the track direction. In the reproduction circuit of Fig. 5, detection signals of the diagonal detection surface segments 3-1 and 3-3 and detection signals of the diagonal detection surfaces 3-2 and 3-4 of the four-divided photo detector 3 are output to the summing amplifiers 18 and 19, respectively, and the detection signals of the diagonal detection surface segments are added to each other, respectively. The sum signals obtained by the summing amplifiers 18, 19 are provided to the differential amplifier 20, which detects a difference therebetween to produce the reproduction signal as shown in (d) of Fig. 4. The obtained reproduction signal is at about zero level if no domain is within the optical spot, but has a positive peak if an edge of the domain is located within the optical spot. The edge of the domain may be detected by detecting the position of the signal peak so as to reproduce the information. If the domain is positioned in the optical spot, the signal would be slightly in the negative range.

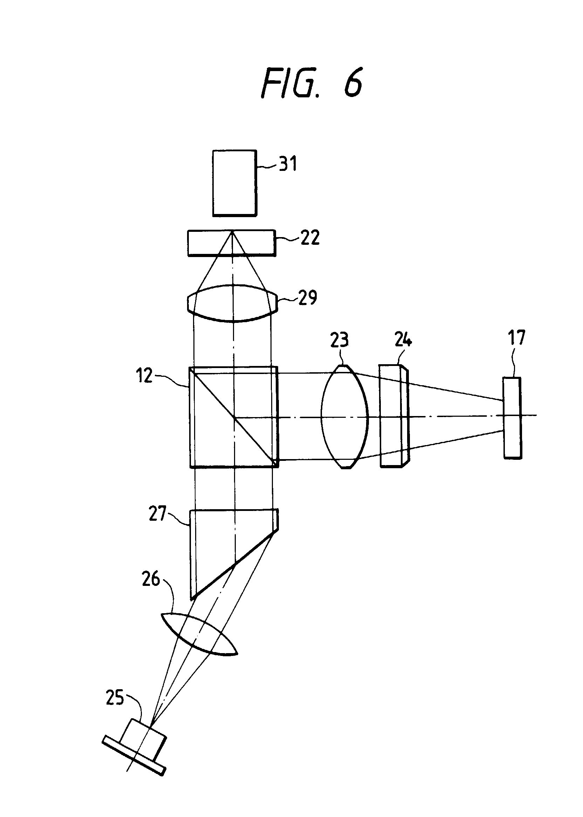

Fig. 6 is a constitutional drawing to show another embodiment of the magneto-optical information recording/reproducing apparatus according to the present invention. The embodiment as shown in Fig. 3 is an example which can be applied to the magneto-optical disk using the continuous groove method or the sampled servo method, while the embodiment as shown in Fig. 6 is an example which has a limited application to one employing the sampled servo method. In Fig. 6, the same reference numerals are given to the same elements as in Fig. 3, and the details thereof are omitted to explain. In Fig. 6, reference numeral 12 designates a polarizing beam splitter, which has such properties that for P polarization the transmittance is 100 % and the reflectance is 0 % while for S polarization the transmittance is 0 % and the reflectance is 100 %. In other words, the polarizing beam splitter 12 reflects only the optical flux of S polarization to take it out of the optical flux reflected by the magneto-optical disk 22, which has the same function as the polarizing beam splitter 1 as shown in the embodiment of Fig. 3. The single polarizing beam splitter 12 has the both functions of the polarizing beam splitters 28 and 1 as shown in Fig. 3. Numeral 23 denotes a condenser lens, 24 a cylindrical lens, and 17 a four-divided photo detector. The cylindrical lens 24 is positioned such that the generatrix thereof is parallel or perpendicular to the track of the magneto-optical disk 22, and the four-divided photo detector 17 is positioned such that the division lines thereof are at an angle of 45 degrees to the information track as shown in Fig. 4. The magneto-optical disk 22 is of course formatted in the sampled servo method. In detail, one track is divided into some blocks, each block comprising of a servo region and a data region. The detection operations of the error signal for servo and of the information signal are carried out in time division. The servo region is separated into a region in which wobbled pits are recorded for tracking and into a mirror mark region for focusing. The magnetization direction of the servo region is the same as that in initialization.

An error signal for tracking may be obtained by summing all the signals from the four detection surface segments of the four-divided photo detector 17 while the optical spot is scanning the wobbled pit region in the servo region. An error signal for focusing may be obtained in the astigmatic method. In detail, the error signal for focusing may be obtained from an output of the reproduction circuit as shown in Fig. 5 while the optical spot is scanning the mirror mark region in the servo region. Further, when the information in the data region is reproduced, all the signals from the four detection surface segments of the four-divided photo detector 17 are added up in case of the detection of change in quantity of light, or, a single photo detector without division is used for the detection. In case of the detection of a change in distribution of light, the reproduction signal may be obtained by the reproduction circuit as shown in Fig. 5.

Although the garnet type having the large polarization rotation angle is used as the magneto-optical disk in the above embodiments, the magneto-optical recording medium may be of the rare earth-transition metal type having the small polarization rotation angle or of other type, if a photo detector improved in detection sensitivity and reduced in noises is used.

According to the present invention as described, only the linearly polarized light having the polarization direction perpendicular to the polarization direction of incident light is separated out of the reflection light from the magneto-optical recording medium and the separated light is detected by the photo detector to reproduce information, whereby the number of constitutional parts of the optical head may be reduced and the optical head may be reduced in size and weight while reducing the production cost thereof. Also, the edge of the recording pit is directly detected in the optical manner, so that the edge of the pit may be accurately detected.

## Claims

1. An optical apparatus for performing at least the function of reproducing information on a magneto-optical recording medium (22), the information being recorded as a region (6) of the medium of inverted magnetization relative to surrounding regions of the medium, the apparatus comprising:
irradiating means (25) for irradiating the recording medium (22) with a beam of radiation polarized in a predetermined direction, the beam and region (6) being arranged to move relative to each other;
the width of said region (6) of the recording medium (22) being smaller in the direction perpendicular to the direction of relative movement of said beam and said region (6) than the diameter of the beam of radiation;
optical means (1; 12) for separating linearly polarized radiation having a direction of polarization (S) perpendicular to said predetermined direction (P) from the radiation passing from said recording medium (22); and
detecting means (3) arranged to detect the radiation separated out by said optical means (1; 12)
the apparatus being characterised in that
said detecting means (3) has a detection surface divided into at least four areas such that two diagonally opposed areas (3-1, 3-3) of the detection surface are arranged to receive radiation from two irradiated parts of the medium extending beyond the region (6) at opposite edges of said region, and the two other diagonally opposed areas (3-2, 3-4) of the detection surface are arranged to detect radiation from different simultaneously irradiated parts of the region along the direction of relative movement of the region and the beam;
means (18, 19) for summing detection signals from the pairs of opposing diagonal areas (3-1, 3-3; 3-2, 3-4) of the detection surface of the detector (3); and
means (20) for detecting the difference between the summed detection signals; and
means for reproducing information based on changes in the distribution of radiation detected by said detecting means (3).

2. An apparatus according to claim 1 effective also to record information and including magnetic field generating means effective to create said region (6) of inverted magnetization of smaller width than the diameter of the beam of radiation.

3. A method for performing at least the function of reproducing information on a magneto-optical recording medium (22), the information being recorded as a region (6) of the medium of inverted magnetization relative to surrounding regions of the medium (22), the method comprising the steps of:
irradiating the recording medium (22) with a beam of radiation polarized in a predetermined direction, the beam and region being arranged to move relative to each other;
the width of said region (6) of the recording medium (22) being smaller in the direction perpendicular to the direction of relative movement of said beam and said region (6) than the diameter of the beam of radiation;
separating out the linearly polarized radiation having a direction of polarization (S) perpendicular to said predetermined direction (P) from the radiation passing from said recording medium (22); and
detecting the radiation separated out by said optical means (1; 12)
the method being characterised in that
said detecting step comprises a first step of detecting radiation from two irradiated parts of the medium extending beyond the region at opposite edges of the region (6), and a second step of detecting radiation from two different simultaneously irradiated areas of the region along the direction of relative movement of the region (6) and the beam;
summing the pairs of detection signals formed in each of said first and second detection steps;
detecting the difference between the summed detection signals; and
reproducing information using changes in the distribution of detected radiation by said detecting means (3).

4. A method according to claim 3 including the step of generating a magnetic field so as to record said region (6) of inverted magnetization on the recording medium (22).

## Patentansprüche

1. Optische Vorrichtung zur Ausführung zumindest der Funktion der Wiedergabe von Informationen auf einem magnetooptischen Aufzeichnungsträger (22), wobei die Informationen als ein Bereich (6) des Trägers von mit relativ zu umgebenden Bereichen des Trägers umgekehrter Magnetisierung aufgezeichnet sind, mit
einer Bestrahlungseinrichtung (25) zur Bestrahlung des Aufzeichnungsträgers (22) mit einem Strahl einer in einer vorbestimmten Richtung polarisierten Strahlung, wobei der Strahl und der Bereich (6) zur relativen Bewegung zueinander angeordnet sind,
wobei die Breite des Bereichs (6) des Aufzeichnungsträgers (22) in der Richtung senkrecht zu der Richtung der relativen Bewegung des Strahls und des Bereichs (6) kleiner als der Durchmesser des Strahls der Strahlung ist,
einer optischen Einrichtung (1; 12) zur Trennung linear polarisierter Strahlung mit einer zu der vorbestimmten Richtung (P) senkrechten Polarisationsrichtung (S) von der von dem Aufzeichnungsträger (22) abgegebenen Strahlung, und
einer Erfassungseinrichtung (3) die zur Erfassung der durch die optische Einrichtung (1; 12) herausgetrennten Strahlung angeordnet ist,
**dadurch gekennzeichnet, daß**
die Erfassungseinrichtung (3) eine Erfassungsoberfläche, die zumindest in vier Flächen derart aufgeteilt ist, daß zwei diagonal gegenüberliegende Flächen (3-1, 3-3) der Erfassungsoberfläche zum Empfang von Strahlung von zwei bestrahlten Teilen des Trägers angeordnet sind, die sich jenseits des Bereichs (6) an entgegengesetzten Rändern des Bereichs erstrecken, wobei die zwei anderen diagonal gegenüberliegenden Flächen (3-2, 3-4) der Erfassungsoberfläche zur Erfassung von Strahlung von unterschiedlichen, gleichzeitig beleuchteten Teilen des Bereichs entlang der Richtung relativer Bewegung des Bereichs und des Strahls angeordnet sind,
Einrichtungen (18, 19) zur Addition von Erfassungssignalen von den Paaren gegenüberliegender Diagonal flächen (3-1, 3-3; 3-2, 3-4) der Erfassungsoberfläche der Erfassungseinrichtung (3),
eine Einrichtung (20) zur Erfassung der Differenz zwischen den addierten Erfassungssignalen und
eine Einrichtung zur Informationswiedergabe beruhend auf durch die Erfassungseinrichtung (3) erfaßten Veränderungen in der Strahlungsverteilung aufweist.

2. Vorrichtung nach Anspruch 1,
**dadurch gekennzeichnet, daß**
sie ebenfalls eine Informationsaufzeichnung durchführt und eine Magnetfeld-Erzeugungseinrichtung aufweist, die eine Erzeugung des Bereichs (6) umgekehrter Magnetisierung mit kleinerer Breite als der Durchmesser des Strahls der Strahlung durchführt.

3. Verfahren zur Ausführung zumindest der Funktion der Wiedergabe von Informationen auf einem magnetooptischen Aufzeichnungsträger (22), wobei die Informationen als ein Bereich (6) des Trägers von mit relativ zu umgebenden Bereichen des Trägers (22) umgekehrter Magnetisierung aufgezeichnet sind, mit den Schritten
Bestrahlen des Aufzeichnungsträgets (22) mit einem Strahl einer in einer vorbestimmten Richtung polarisierten Strahlung, wobei der Strahl und der Bereich zur relativen Bewegung zueinander angeordnet sind,
wobei die Breite des Bereichs (6) des Aufzeichnungsträgers (22) in der Richtung senkrecht zu der Richtung der relativen Bewegung des Strahls und des Bereichs (6) kleiner als der Durchmesser des Strahls der Strahlung ist,
Heraustrennen der linear polarisierter Strahlung mit einer zu der vorbestimmten Richtung (P) senkrechten Polarisationsrichtung (S) von der von dem Aufzeichnungsträger (22) abgegebenen Strahlung, und
Erfassen der durch die optische Einrichtung (1; 12) herausgetrennten Strahlung,
**dadurch gekennzeichnet, daß**
der Erfassungsschritt einen ersten Schritt Erfassen von Strahlung von zwei bestrahlten Teilen des Trägers, die sich jenseits des Bereichs an entgegengesetzten Rändern des Bereichs (6) erstrecken, und einen zweiten Schritt Erfassen von Strahlung von zwei unterschiedlichen, gleichzeitig beleuchteten Flächen des Bereichs entlang der Richtung relativer Bewegung des Bereichs (6) und des Strahls,
Addieren der in jedem der ersten und zweiten Erfassungsschritte ausgebildeten Paare von Erfassungssignalen,
Erfassen der Differenz zwischen den addierten Erfassungssignalen und
Informationswiedergeben unter Verwendung von Veränderungen in der Verteilung von durch die Erfassungseinrichtung (3) erfaßten Strahlung aufweist.

4. Verfahren nach Anspruch 3,
**gekennzeichnet durch**
den Schritt Erzeugen eines Magnetfelds zur Aufzeichnung des Bereichs (6) umgekehrter Magnetisierung auf dem Aufzeichnungsträger (22).

## Revendications

1. Appareil optique pour réaliser au moins une fonction de reproduction d'informations sur un support d'enregistrement magnéto-optique (22), l'information étant enregistrée sous la forme d'une région (6) du support ayant une magnétisation inversée par rapport aux régions avoisinantes du support, l'appareil comprenant :
des moyens d'exposition (25) pour exposer le support d'enregistrement (22) à un faisceau de rayonnement polarisé dans une direction prédéterminée, le faisceau et la région (6) étant conçus pour se déplacer l'un par rapport à l'autre ;
la largeur de ladite région (6) du support d'enregistrement (22) étant inférieure, dans la direction perpendiculaire à la direction de mouvement relatif dudit faisceau et de ladite région (6), au diamètre du faisceau de rayonnement ;
des moyens optiques (1 ; 12) pour séparer un rayonnement polarisé linéairement ayant une direction de polarisation (S) perpendiculaire à ladite direction prédéterminée (P) du rayonnement passant en provenance dudit support d'enregistrement (22) ; et
des moyens de détection (3) conçus pour détecter le rayonnement séparé par lesdits moyens optiques (1 ; 12)
l'appareil étant caractérisé en ce que
lesdits moyens de détection (3) ont une surface de détection divisée en au moins quatre zones de telle façon que deux zones diagonalement opposées (3-1, 3-3) de la surface de détection soient agencées pour recevoir un rayonnement de deux parties exposées du support s'étendant au-delà de la région (6) sur des bords opposés de ladite région, et que les deux autres zones diagonalement opposées (3-2, 3-4) de la surface de détection soient agencées de façon à détecter un rayonnement provenant de parties différentes exposées simultanément de la région le long de la direction de mouvement relatif de la région et du faisceau ;
des moyens (18, 19) pour sommer des signaux de détection provenant des paires de zones diagonalement opposées (3-1, 3-3 ; 3-2, 3-4) de la surface de détection du détecteur (3) ; et
des moyens (20) pour détecter la différence entre les signaux de détection sommés ; et
des moyens pour reproduire des informations sur la base de variations de la distribution de rayonnement détectée par lesdits moyens de détection (3).

2. Appareil selon la revendication 1 servant également à enregistrer des informations et comportant des moyens générateurs de champ magnétique servant à créer ladite région (6) de magnétisation inversée de largeur inférieure au diamètre du faisceau de rayonnement.

3. Procédé pour réaliser au moins la fonction de reproduction d'informations sur un support d'enregistrement magnéto-optique (22), l'information étant enregistrée sous la forme d'une région (6) du support ayant une magnétisation inversée par rapport à des régions avoisinantes du support (22), le procédé comprenant les étapes qui consistent :
à exposer le support d'enregistrement (22) à un faisceau de rayonnement polarisé dans une direction prédéterminée, le faisceau et la région étant agencés de façon à se déplacer l'un par rapport à l'autre ;
la largeur de ladite région (6) du support d'enregistrement (22) étant inférieure, dans la direction perpendiculaire à la direction de déplacement relatif dudit faisceau et de ladite région (6), au diamètre du faisceau de rayonnement ;
à séparer le rayonnement polarisé linéairement ayant une direction de polarisation (S) perpendiculaire à ladite direction prédéterminée (P) du rayonnement passant en provenance dudit support d'enregistrement (22) ; et
à détecter le rayonnement séparé par lesdits moyens optiques (1 ; 12)
le procédé étant caractérisé en ce que
ladite étape de détection comprend une première étape consistant à détecter un rayonnement provenant de deux parties exposées du support s'étendant au-delà de la région sur des bords opposés de la région (6), et une seconde étape consistant à détecter un rayonnement provenant de deux zones différentes exposées simultanément de la région le long de la direction de déplacement relatif de la région (6) et du faisceau ;
à sommer les paires de signaux de détection formées lors de chacune desdites première et seconde étapes de détection ;
à détecter la différence entre les signaux de détection sommés ; et
à reproduire des informations en utilisant des variations de la distribution du rayonnement détecté par lesdits moyens de détection (3).

4. Procédé selon la revendication 3, comportant l'étape consistant à générer un champ magnétique de façon à enregistrer ladite région (6) de magnétisation inversée sur le support d'enregistrement (22).
